# EUROPÄISCHE PATENTSCHRIFT

(11) **EP 0 545 865 B1**
(45) Veröffentlichungstag und Bekanntmachung des Hinweises auf die Patenterteilung: **28.02.1996**
(21) Anmeldenummer: 92810922.2
(22) Anmeldetag: 27.11.1992
(51) Int. Cl.: C08K 5/37, C08K 5/15

(54) **Stabilisatorgemisch**
Stabilizing mixture
Mélange stabilisant

(30) Priorität: 06.12.1991 CH 3592/91
(43) Veröffentlichungstag der Anmeldung: 09.06.1993
(73) Patentinhaber: CIBA-GEIGY AG, CH-4002 Basel (CH)
(72) Erfinder: Knobloch, Gerrit, Dr., CH-4312 Magden (CH); Martin, Heinrich, CH-4208 Nunningen (CH)

(56) Entgegenhaltungen:
- CH-A- 257 412
- US-A- 4 857 572

## Beschreibung

Die vorliegende Erfindung betrifft ein neues Stabilisatorgemisch, welches insbesondere zur Verwendung in Zusammensetzungen geeignet ist, die ein Elastomer oder ein klebrigmachendes Harz oder ein Elastomer und ein klebrigmachendes Harz enthalten.

Zusammensetzungen dieser Art sind im Verlaufe ihrer Herstellung, Lagerung, Verarbeitung und Endanwendung einer Vielzahl von Einflüssen ausgesetzt, die ihre Eigenschaften meist in unerwünschter Weise verändem. Eine wesentliche Rolle spielen hierbei Temperatur, Luftsauerstoff, Licht und auch mechanische Beanspruchungen durch Scherkräfte.

Durch Verwendung gewisser Stabilisatoren wie Antioxidantien, Verarbeitungsstabilisatoren, Metalldesaktivatoren und Lichtschutzmittel wurde versucht, diesen Einflüssen zu begegnen. So ist beispielsweise aus US-A-5,008,459, US-A-4,857,572, US-A-4,820,756, US-A-4,741,864 und US-A-4,759,862 bekannt, Elastomerzusammensetzungen mit Bis-(alkylmercaptomethyl)-phenolen zu stabilisieren. Nach US-A-3,658,743 kommen zur Stabilisierung von ungesättigten, mit Schwefel vulkanisierbaren Elastomeren Stabilisatorgemische zur Anwendung, die ein Phenol, ein organisches Sulfid oder einen Thioester sowie ein Epoxid oder ein Phosphit enthalten. Thermoplastische Polyolefine können nach GB-A-917,100 mit einem Gemisch aus einem Epoxid und einem Antioxidans wie einem Phenol oder einem Thiodipropionat stabilisiert werden.

Es wurde nun ein neues Stabilisatorgemisch aus gewissen Mercaptomethylphenolen und Epoxiden gefunden, das sich insbesondere zur Stabilisierung von Zusammensetzungen eignet, die ein Elastomer oder ein klebrigmachendes Harz oder ein Elastomer und ein klebrigmachendes Harz enthalten.

Gegenstand der vorliegenden Erfindung ist somit ein Stabilisatorgemisch enthaltend
(a) einem Mercaptomethylphenol der Formel 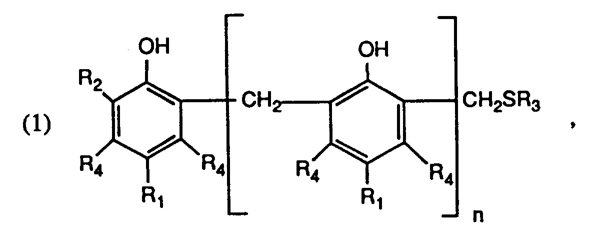 worin n 0 oder 1 ist, R₁ und R₂ unabhängig voneinander Alkyl mit 1 bis 12 Kohlenstoffatomen oder ein Rest der Formel -CH₂SR₃ sind, worin R₃ Alkyl mit 6 bis 18 Kohlenstoffatomen, Phenyl oder Benzyl ist, und die Reste R₄ unabhängig voneinander Wasserstoff oder Methyl sind, wobei an denselben Ring gebundene Reste R₄ nicht gleichzeitig Methyl sind, und
(b) einer epoxidierten Fettsäure mit 3 bis 22 Kohlenstoffatomen oder einem Alkylester davon mit 1 bis 18 Kohlenstoffatomen,
   wobei (a) und (b) im Gewichtsverhältnis von 99:1 bis 1:10, insbesondere 10:1 bis 1:10 vorliegen.

Gegenstand der vorliegenden Erfindung sind auch eine Zusammensetzung enthaltend ein Elastomer oder ein klebrigmachendes Harz oder ein Elastomer und ein klebrigmachendes Harz; sowie ein wie oben definiertes Stabilisatorgemisch, die Verwendung eines solchen Gemisches zum Stabilisieren von Zusammensetzungen, die ein Elastomer oder ein klebrigmachendes Harz oder ein Elastomer und ein klebrigmachendes Harz enthalten; und ein Verfahren zum Stabilisieren dieser Zusammensetzung mit dem Stabilisatorgemisch.

In Komponente (a), d.h. in den Verbindungen der Formel (1), können R₁ und R₂ unabhängig voneinander Alkyl mit 1 bis 12 Kohlenstoffatomen bedeuten, z.B. Methyl, Aethyl, Propyl, Butyl, Hexyl, Octyl, Undecyl und Dodecyl sowie entsprechende verzweigte Isomere, ferner ein Rest der Formel -CH₂SR₃, worin R₃ neben Phenyl oder Benzyl auch Alkyl mit 6 bis 18 Kohlenstoffatomen wie Hexyl, Octyl, Nonyl, Decyl, Dodecyl, Tetradecyl und Octadecyl oder ein verzweigtes Isomer solcher Reste bedeuten kann.

Die Verbindungen der Formel (1) sind z.B. in der bereits genannten US-A-4,857,572 zusammen mit ihrer Herstellung beschrieben.

Die als Komponente (b) verwendeten epoxidierten Fettsäuren und Fettsäurealkylester umfassen beispielsweise epoxidierte Oelsäure, Linolsäure, Linolensäure, Erucasäure, Ricinolsäure und Brassidinsäure, welche gegebenenfalls mit ein- oder mehrwertigen Alkoholen wie Methanol, Butanol, Laurylalkohol, Octylalkohol sowie Pentaerythritol, Glycerol, Aethylenglycol, Propylenglycol, Butylenglycol, Neopentylglycol, Mannitol und Sorbitol verestert sind. Die genannten mehrwertigen Alkohole können ganz oder teilweise verestert sein. Des weiteren umfasst Komponente (b) Gemische epoxidierter höherer Fettsäureester wie epoxidiertes Baumwollkem-, Rizinus-, Sonnenblumen- oder Olivenöl, epoxidierter Talg oder insbesondere epoxidiertes Sojabohnen- oder Leinöl.

Solche Substanzen sind im Handel erhältlich, beispielsweise verschiedene Sojabohnenöle unter den Bezeichnungen Paraplex®G-60, G-61 und G-62, Flexol® EPO und Reoplast®392.

Vorzugsweise handelt es sich bei der Komponenete (a) um solche Verbindungen der Formel (1), worin 0 oder 1 ist, R₁ und R₂ unabhängig voneinander Alkyl mit 1 bis 4 Kohlenstoffatomen oder ein Rest der Formel -CH₂SR₃ sind, R₃ Alkyl mit 6 bis 12 Kohlenstoffatomen ist, und die Reste R₄ unabhängig voneinander Wasserstoff oder Methyl sind, wobei an denselben Ring gebundene Reste R₄ nicht gleichzeitig Methyl sind.

Von diesen Verbindungen der Formel (1) kommt jenen eine besondere Bedeutung zu, worin n 0, R₁ -CH₂SC₈H₁₇, R₂ Methyl, R₃ Octyl ist, und Reste R₄ Wasserstoff sind.

Weitere bevorzugte Gruppen von Verbindungen der Formel (1) sind solche, worin n 0, R₁ ein Rest der Formel -CH₂SR₃, R₃ Alkyl mit 6 bis 18 Kohlenstoffatomen, Phenyl oder Benzyl ist, R₂ Alkyl mit 1 bis 12 Kohlenstoffatomen und R₄ Wasserstoff ist, bzw. solche Verbindungen, worin n 0, R₁ Alkyl mit 1 bis 12 Kohlenstoffatomen, R₂ ein Rest der Formel -CH₂SR₃, R₃ Alkyl mit 6 bis 18 Kohlenstoffatomen, Phenyl oder Benzyl ist, und R₄ Wasserstoff ist.

Besonders bevorzugte Verbindungen der Formel (1) sind solche, worin n 0, R₁ ein Rest der Formel -CH₂SR₃, R₃ Alkyl mit 6 bis 18 Kohlenstoffatomen, Phenyl oder Benzyl ist, R₂ Methyl, und R₄ Wasserstoff ist.

Bevorzugt ist Komponente (b) ein Gemisch epoxidierter Fettsäureester wie z.B. epoxidiertes Rizinus- oder Sonnenblumenöl und insbesondere epoxidiertes Sojabohnenoder Leinöl.

Die erfindungsgemässen Zusammensetzungen enthalten vorzugsweise 0,01 bis 10 Gew.% des Stabilisatorgemisches bezogen auf das Elastomer oder klebrigmachende Harz oder das Elastomer und klebrigmachende Harz.

Als Elastomer können die erfindungsgemässen Zusammensetzungen beispielsweise enthalten:
1. Polydiene, wie beispielsweise Polybutadien, Polyisopren oder Polychloropren; Blockcopolymere, wie beispielsweise Styrol/Butadien/Styrol oder Styrol/Isopren/Styrol; und Copolymere wie Acrylnitril/Butadien und Styrol/Butadien.
2. Copolymere von Mono- und Diolefinen untereinander oder mit anderen Vinylmonomeren, wie z.B. Aethylen-Alkylacrylat-Copolymere, Aethylen-Alkylmethacrylat-Copolymere, Aethylen-Vinylacetat-Copolymere sowie Terpolymere von Aethylen mit Propylen und einem Dien, wie Hexadien, Dicyclopentadien oder Aethylidennorbornen.
3. Halogenhaltige Polymere, wie z.B. Polychloropren, Chlorkautschuk, chloriertes oder chlorsulfoniertes Polyäthylen, Epichlorhydrin-Homo- und -Copolymere, Chlortrifluoräthylen-Copolymere, Polymere aus halogenhaltigen Vinylverbindungen, wie z.B. Polyvinylidenchlorid, Polyvinylidenfluorid; sowie deren Copolymere, wie Vinylchlorid-Vinylidenchlorid, Vinylchlorid-Vinylacetat oder Vinylidenchlorid-Vinylacetat.
4. Polyurethane, die sich von Polyäthern, Polyestern und Polybutadien mit endständigen Hydroxylgruppen einerseits und aliphatischen oder aromatischen Polyisocyanaten andererseits ableiten sowie deren Vorprodukte.
5. Naturkautschuk.
6. Mischungen (Polyblends) der vorgenannten Polymeren.
7. Wässrige Dispersionen natürlicher oder synthetischer Kautschuke, wie z.B. Naturkautschuk-Latex oder Latices von carboxylierten Styrol-Butadien-Copolymeren.

Gegebenenfalls liegen diese Elastomere als Latices vor und können als solche stabilisiert werden.

Bevorzugt kommen Polydiene wie Polybutadien-Kautschuk, seine Copolymeren wie Styrol/Butadien-Kautschuk oder lineare oder verzweigte Styrol/Butadien/Styrol- und Styrol/Isopren/Styrol-Blockcopolymere, Copolymere aus Aethylen/Vinylacetat oder ein Polyurethan in Frage.

Als klebrigemachende Harze können die erfindungsgemässen Zusammensetzungen beispielsweise enthalten:
- Natürliche Kolophoniumharze (rosins) wie gum rosin, wood rosin, tall oil rosin.
- Derivate der Kolophoniumharze, wie Glycerolester, Pentaerythritester, jeweils hydriert oder nicht hydriert, disproportioniert oder nicht disproportioniert
- Synthetische Kohlenwasserstoffharze, insbesondere mit 5 oder 9 Kohlenstoffatomen,
- Indenharze, Methylindenharze, Cumaron-Indenharze
- Terpenharze
- Methylstyrolharze
- Phenolharze
- weitere Klebrigmacher wie Asphalt oder Bitumen
- Mischungen vorgenannter Harze
- wässrige Emulsionen vorgenannter Harze.

Bevorzugt kommen ein synthetisches Kohlenwasserstoffharz, insbesondere mit 5 oder 9 Kohlenstoffatomen, ein Kolophoniumharz oder ein Derivat von Kolophoniumharzen in Frage.

Die Einarbeitung des erfindungsgemässen Stabilisatorgemisches in die Elastomeren oder klebrigmachenden Harze oder Elastomeren und klebrigmachenden Harze kann beispielsweise durch Zugabe von entsprechenden Stabilisatorlösungen oder -emulsionen/dispersionen zu den Polymerlösungen oder -latices vor dem Ausfällen oder durch Einmischen nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen. Das Stabilisatorgemisch kann auch in Form eines Masterbatches, das dieses Gemisch beispielsweise in einer Konzentration von 2,5 bis 25 Gew.-% enthält, zugesetzt werden.

Die Tatsache, dass das erfindungsgemässe Stabilisatorgemisch mit Erfolg zur Stabilisierung von klebrigmachenden Harzen verwendet werden kann, ist im Hinblick auf die Herstellung stabilisierter Klebstoffe von grosser Bedeutung, da klebrigmachende Harze Ausgangsmaterialien für Klebstoffe darstellen. Deshalb ist ihre Stabilisierung bereits auf der Stufe der Rohstoffe möglich, was verfahrenstechnisch von Bedeutung sein kann.

Klebstoffe stellen in der Regel eine Zusammensetzung aus Elastomer, klebrigmachendem Harz und einem Wachs oder Oel als weiterem Bestandteil dar. Geeignete Wachse für Klebstoffe sind beispielsweise Paraffin- oder Mikrowachse oder Fischer-Tropsch Paraffine; sie können natürlichen oder synthetischen Ursprungs sein. Beispiele für Öle sind aromatische, naphthenische oder paraffinische Öle, welche je nach Anwendung aufgrund von vorallem Löslichkeitseigenschaften und Molekulargewicht ausgewählt werden.

Im Zusammenhang mit der vorliegenden Erfindung sind insbesondere Zusammensetzungen von Interesse, die eine Anwendung als Heissschmelzklebstoffe erlauben. Diese enthalten als Elastomer und klebrigmachendes Harz die oben als bevorzugt herausgestellten Substanzen, insbesondere lineare oder verzweigte Styrol/Butadien/Styroloder Styrol/Isopren/Styrolblockcopolymere sowie Kolophoniumharze oder synthetische Kohlenwasserstoffharze. Durch Anwendung der erfindungsgemässen Stabilisatormischung gelingt es, gerade solche Heissschmelzklebstoffe wirksam gegen die eingangs erwähnten nachteiligen Einflüsse zu schützen, wodurch den Klebstoffen ihre ursprüngliche Klebkraft und Transparenz bzw. helle Eigenfarbe über längere Zeit erhalten bleibt.

Weitere Additive, die in der erfindungsgemässen Zusammensetzung eingesetzt werden können, sind beispielsweise:

### 1. Antioxidantien

1.1. und 1.2. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Di-methyl-6-(1'-methyl-tridec-1'-yl)-phenol und Mischungen davon.
1.2. Alkylthiomethylphenole, z.B. 2,4-Di-octylthiomethyl-6-tert.-butylphenol, 2,4-Di-octylthiomethyl-6-methylphenol,2,4-Di-octylthiomethyl-6-ethylphenol,2,6-Di-dodecylthiomethyl-4-nonylphenol.
1.3. Hydrochinone und alkylierte Hydrochinone, z.B. 2,6-Di-tert.butyl-4-methoxyphenol, 2,5-Di-tert.butyl-hydrochinon,2,5-Di-tert.amyl-hydrochinon,2,6-Diphenyl-4-octadecyloxyphenol,2,6-Di-tert.-butyl-hydrochinon, 2,5-Di-tert.-butyl-4-hydroxyanisol, 3,5-Di-tert.-butyl-4-hydroxyanisol, 3,5-Di-tert.-butyl-4-hydroxyphenyl-stearat, Bis-(3,5-di-tert.-butyl-4-hydroxyphenyl)adipat.
1.4. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol), 4,4'-Thio-bis-(3,6-di-sec.-amylphenol), 4,4'-Bis-(2,6-dimethyl-4-hydroxyphenyl)-disulfid.
1.5. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methyl-cyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methyl-phenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat, 1,1-Bis-(3,5-dimethyl-2-hydroxyphenyl)-butan, 2,2-Bis-(3,5-di-tert.-butyl-4-hydroxyphenyl)-propan, 2,2-Bis-(5-tert.-butyl-4-hydroxy-2-methylphenyl)-4-n-dodecylmercapto-butan, 1,1,5,5-Tetra-(5-tert.-butyl-4-hydroxy-2-methylphenyl)-pentan.
1.6. O-,N- und S-Benzylverbindungen, z.B. 3,5,3',5'-Tetra-tert.-butyl-4,4'-dihydroxydibenzylether, Octadecyl-4-hydroxy-3,5-dimethylbenzyl-mercaptoacetat, Tris-(3,5-di-tert.-butyl-4-hydroxybenzyl)-amin, Bis-(4-tert.-butyl-3-hydroxy-2,6-dimethylbenzyl)-dithioterephthalat, Bis-(3,5-di-tert.-butyl-4-hydroxybenzyl)-sulfid, Isooctyl-3,5-di-tert.-butyl-4-hydroxybenzyl-mercaptoacetat.
1.7. Hydroxybenzylierte Malonate, z.B. Dioctadecyl-2,2-bis-(3,5-di-tert.-butyl-2-hydroxybenzyl)-malonat, Di-octadecyl-2-(3-tert.-butyl-4-hydroxy-5-methylbenzyl)-malonat, Di-dodecylmercaptoethyl-2,2-bis-(3,5-di-tert.-butyl-4-hydroxybenzyl)-malonat, Di-[4-(1,1,3,3-tetramethylbutyl)-phenyl]-2,2-bis-(3,5-di-tert.-butyl-4-hydroxybenzyl)-malonat.
1.8. Hydroxybenzyl-Aromaten, z.B. 1,3,5-Tris-(3,5-di-tert.-butyl-4-hydroxybenzyl)-2,4,6-trimethylbenzol, 1,4-Bis-(3,5-di-tert.-butyl-4-hydroxybenzyl)-2,3,5,6-tetramethylbenzol, 2,4,6-Tris-(3,5-di-tert.-butyl-4-hydroxybenzyl)-phenol.
1.9. Triazinverbindungen, z.B. 2,4-Bis-octylmercapto-6-(3,5-di-tert.-butyl-4-hydroxyanilino)-1,3,5-triazin, 2-Octylmercapto-4,6-bis-(3,5-di-tert.-butyl-4-hydroxyanilino)-1,3,5-triazin, 2-Octylmercapto-4,6-bis-(3,5-di-tert.-butyl-4-hydroxyphenoxy)-1,3,5-triazin, 2,4,6-Tris-(3,5-di-tert.-butyl-4-hydroxyphenoxy)-1,2,3-triazin, 1,3,5-Tris-(3,5-di-tert.-butyl-4-hydroxybenzyl)-isocyanurat, 1,3,5-Tris-(4-tert.-butyl-3-hydroxy-2,6-di-methylbenzyl)-isocyanurat, 2,4,6-Tris-(3,5-di-tert.-butyl-4-hydroxyphenylethyl)-1,3,5-triazin, 1,3,5-Tris-(3,5-di-tert.butyl-4-hydroxyphenylpropionyl)hexahydro-1,3,5-triazin, 1,3,5-Tris-(3,5-dicyclohexyl-4-hydroxybenzyl)-isocyanurat.
1.10. Benzylphosphonate, z.B. Dimethyl-2,5-di-tert.-butyl-4-hydroxybenzylphosphonat, Diethyl-3,5-di-tert.-butyl-4-hydroxybenzylphosphonat, Dioctadecyl-3,5-di-tert.-butyl-4-hydroxybenzylphosphonat, Dioctadecyl-5-tert.-butyl-4-hydroxy-3-methylbenzylphosphonat, Ca-Salz des 3,5-Di-tert.-butyl-4-hydroxybenzyl-phosphonsäure-monoethylesters.
1.11. Acylaminophenole, z.B. 4-Hydroxy-laurinsäureanilid, 4-Hydroxystearinsäureanilid, N-(3,5-di-tert.butyl-4-hydroxyphenyl)-carbaminsäureoctylester.
1.12. Ester der β-(3,5-Di-tert.butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Tri-methylhexandiol, Trimethylolpropan, 4-Hydroxymethyl-1-phospha-2,6,7-trioxabicyclo-[2.2.2]-octan.
1.13. Ester der β-(5-tert.Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.14. Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl- 1-phospha-2,6,7-trioxabicyclo-[2.2.2]-octan.
1.15. Ester der 3,5-Di-tert.-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.16. Amide der β-3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.-butyl-4-hydroxyphenylpropionyl)-trimethylendiamin, N,N'-Bis-(3,5-di-tert.butyl-4-hydroxyphenylpropionyl)-hydrazin.

### 2. UV-Absorber und Lichtschutzmittel

2.1. 2-(2'-Hydroxyphenyl)-benztriazole, wie z.B. 5'-Methyl-, 3',5'-Di-tert.butyl-, 5'-tert.-Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl-, 4'-Octoxy-, 3',5'-Di-tert.amyl-, 3',5'-Bis-(α,α-di-methylbenzyl)-, Mischung aus 5-Chlor-3'-tert.-butyl-5'-(2-octyloxycarbonylethyl)- und 5-Chlor-3'-tert.-butyl-5'-[2-(2-ethylhexyloxy)-carbonylethyl]-,5-Chlor-3'-tert.-butyl-5'-(2-methoxycarbonylethyl)-, 3'-tert.-Butyl-5'-(2-methoxycarbonylethyl)-, 3'-tert.-Butyl-5'-(2-octyloxycarbonylethyl)-, 3'-tert.-Butyl-5'-[2-(2-ethylhexyloxy)-carbonylethyl]-,3'-Dodecyl-5'-methyl- und 3'-tert.-Butyl-5'-(2-isooctyloxycarbonylethyl)-2'-hydroxyphenyl-2H-benztriazol(2), 2,2'-Methylen-bis[4-(1,1,3,3-tetramethylbutyl)-6-benztriazol-2-yl-phenol]; Umesterungsprodukt von 2-[3'-tert.-Butyl-5'-(2-methoxycarbonylethyl)-2'-hydroxy-phenyl]-2H-benztriazol mit Polyethylenglycol 300; 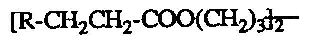 mit R=3'-tert.-Butyl-4'-hydroxy-5'-2H-benzotriazol-2-yl-phenyl.
2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3. Ester von gegebenenfalls substituierten Benzoesäuren, wie z.B. 4-tert.Butyl-phenyl-salicylat, Phenylsalicylat, Octylphenyl-salicylat, Dibenzoylresorcin, Bis-(4-tert.butyl-benzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester, 3,5-Di-tert.-butyl-4-hydroxybenzoesäure-octadecylester, 3,5-Di-tert.-butyl-4-hydroxybenzoesäure-2-methyl-4,6-di-tert.-butylphenylester.
2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
2.6. Sterisch gehinderte Amine, wie z.B. Bis-(2,2,6,6-tetramethyl-piperidyl)-sebacat Bis-(2,2,6,6-tetramethyl-piperidyl)-succinat, Bis-(1,2,2,6,6-pentamethylpiperidyl)-sebacat, n-Butyl-3,5-di-tert.Butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bemsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert.-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)- 1,3,5-triazin und 1,2-Bis-(3-aminopropylamino)-äthan, 8-Acetyl-3-dodecyl-7,7,9,9-tetramethyl-1,3,8-triazaspiro-[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
2.7. Oxalsäurediamide, wie z.B. 4,4'-Di-octyloxy-oxanilid,2,2'-Di-octyloxy-5,5'-di-tert.-butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
2.8. 2-(2-Hydroxyphenyl)-1,3,5-triazine, wie z.B. 2,4,6-Tris(2-hydroxy-4-octyloxyphenyl)- 1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)- 1,3,5-triazin, 2-(2-Hydroxy-4-dodecyloxy-phenyl)-4,6-bis(2,4-dimethylphenyl)-1,3,5-triazin, 2-[2-hydroxy-4-(2-hydroxy-3-butyl-oxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)- 1,3,5-triazin.

3.Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetal-adipinsäure-dihydrazid, N,N'-Bis-salicyloyl-oxalsäure-dihydrazid, N,N'-Bis-salicyloyl-thiopropionsäure-dihydrazid.

4.Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Bis-(2,6-di-tert.-butyl-4-methylphenyl)-pentaerythritdiphosphit, Bis-isodecyloxy-pentaerythritdiphosphit, Bis-(2,4-di-tert.-butyl-6-methylphenyl)-pentaerythritdiphosphit, Bis-(2,4,6-tri-tert.-butylphenyl)-pentaerythritdiphsophit, Tristearyl-sorbit-triphosphit, Tetrakis-(2,4-di-tert.butylphenyl)-4,4'-biphenylen-diphosphonit, 6-Isooctyloxy-2,4,8,10-tetra-tert.-butyl-12H-dibenz[d,g]-1,3,2-dioxaphosphocin, 6-Fluor-2,4,8,10-tetra-tert.-butyl- 12-methyl-dibenz[d,g]-1,3,2-dioxaphosphocin.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

11. Vernetzungsmittel, wie organische Peroxide, Schwefel, Zinkoxid, Stearinsäure und Vulkanisationsbeschleuniger.

Die nachfolgenden Beispiele erläutern die Erfindung weiter. Teile und Prozente beziehen sich auf das Gewicht.

### Beispiel 1: Herstellung der Stabilisatormischung

Stabilisatormischungen lassen sich durch einfaches Vermischen der Komponenten (a) und (b) in jedem der in Frage kommenden Gewichtsverhältnisse herstellen. Im einzelnen geht man so vor, dass man die Mischung, während sie gerührt wird, auf etwa 120°C erhitzt, sie bei dieser Temperatur 2 Stunden belässt und anschliessend abkühlen lässt. Die so erhaltenen Stabilisatormischungen sind nahezu geruchsfrei.

### Beispiel 2: Herstellung und Alterung eines Heissschmelzklebstoffes

a) 100 Teile ESCOREZ®5380 (ein synthetisches hydriertes Kohlenwasserstoffharz als klebrigmachendes Harz), 50 Teile SHELLFLEX®451 (ein naphthenisches Mineralöl als Weichmacher) und gegebenenfalls Stabilisatormischung in den unten angegebenen Mengen werden bei 175°C unter Rühren in einem Labormischer zu einer homogenen Schmelze vermischt. Dazu gibt man portionenweise 50 Teile CARIFLEX®1107 (ein lineares Styrol/Isopren/Styrol-Blockcopolymer als Elastomer). Nach insgesamt 2 Stunden ist der Mischvorgang abgeschlossen. Proben von 20 Teilen werden in Gläser abgefüllt und diese mit einer Aluminiumfolie abgedeckt. Die Alterung der Proben erfolgt in einem Umluftofen bei 170°C während eines Zeitraums von 3 Tagen. Die Ergebnisse sind in Tabelle 1 dargestellt.

**Tabelle 1:**

| Gardnerfarbe (DIN 6161) nach Alterung bei 170°C | | | | |
|---|---|---|---|---|
| Stabilisator | 0 Tage | 1 Tag | 2 Tage | 3 Tage |
| Kontrolle | 3-4 | 6+ | 7-8 | 10 |
| 0,6% A | 3-4 | 6+ | 6-7 | 9 |
| 0,6% B | 3-4 | 6+ | 6-7 | 7-8 |
| 0,3% A | 3-4 | 5+ | 5+ | 5+ |
| 0,3% B | | | | |

A ist eine Verbindung der Formel (1), worin n 0, R₁ -CH₂SC₈H₁₇, R₂ Metyl, R₃ Octyl ist und die Reste R₄ Wasserstoff sind; B ist ein epoxidiertes Sojabohnenöl (Reoplast^{®} 392).
b)Man wiederholt die unter a) geschilderten Vorgänge, verwendet aber als Elastomer 50 Teile FINAPRENE^{®}F 424 (ein verzweigtes Styrol/Isopren/Styrol-Blockcopolymer). Die Resultate sind in Tabelle 2 zusammengestellt.

**Tabelle 2:**

| Gardnerfarbe (DIN 6161) nach Alterung bei 170°C | | | | |
|---|---|---|---|---|
| Stabilisator | 0 Tage | 1 Tag | 2 Tage | 3 Tage |
| Kontrolle | 3+ | 4-5 | 7-8 | 9+ |
| 0,6% A | 3 | 4-5 | 6+ | 7 |
| 0,6% B | 3 | 6+ | 6-7 | 8 |
| 0,3% A | 3 | 4 | 5-6 | 6 |
| 0,3% B | | | | |

Aus den Tabellen ist das der Wirkung der Einzelkomponenten A und B überlegene Stabilisierungsvermögen der entsprechenden Mischung ersichtlich.

## Patentansprüche

1. Stabilisatorgemisch enthaltend
(a) ein Mercaptomethylphenol der Formel 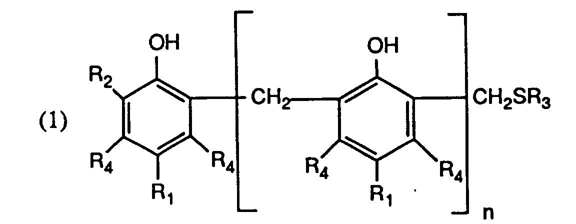 worin n 0 oder 1 ist, R₁ und R₂ unabhängig voneinander Alkyl mit 1 bis 12 Kohlenstoffatomen oder ein Rest der Formel -CH₂SR₃ sind, R₃ Alkyl mit 6 bis 18 Kohlenstoffatomen, Phenyl oder Benzyl ist, und die Reste R₄ unabhängig voneinander Wasserstoff oder Methyl sind, wobei an denselben Ring gebundene Reste R₄ nicht gleichzeitig Methyl sind, und
(b) eine epoxidierte Fettsäure mit 3 bis 22 Kohlenstoffatomen oder einem Alkylester davon mit 1 bis 18 Kohlenstoffatomen,
wobei (a) und (b) im Gewichtsverhältnis von 99:1 bis 1:10 vorliegen.

2. Stabilisatorgemisch nach Anspruch 1, dadurch gekennzeichnet, dass (a) und (b) im Gewichtsverhältnis von 10:1 bis 1:10 vorliegen.

3. Stabilisatorgemisch nach einem der Ansprüche 1 oder 2, dadurch gekennzeichnet, dass n 0 oder 1, R₁ und R₂ unabhängig voneinander Alkyl mit 1 bis 4 Kohlenstoffatomen oder ein Rest der Formel -CH₂SR₃ sind, R₃ Alkyl mit 6 bis 12 Kohlenstoffatomen ist, und die Reste R₄ unabhängig voneinander Wasserstoff oder Methyl sind, wobei an denselben Ring gebundene Reste R₄ nicht gleichzeitig Methyl sind.

4. Stabilisatorgemisch nach einem der Ansprüche 1 oder 2, dadurch gekennzeichnet, dass n 0, R₁ -CH₂SC₈H₁₇, R₂ Methyl, R₃ Octyl ist, und R₄ Wasserstoff sind.

5. Stabilisatorgemisch nach einem der Ansprüche 1 oder 2, dadurch gekennzeichnet, dass n 0, R₁ ein Rest der Formel -CH₂SR₃, worin R₃ Alkyl mit 6 bis 18 Kohlenstoffatomen, Phenyl oder Benzyl ist, R₂ Alkyl mit 1 bis 12 Kohlenstoffatomen und R₄ Wasserstoff ist.

6. Stabilisatorgemisch nach einem der Ansprüche 1 oder 2, dadurch gekennzeichnet, dass n 0, R₁ Alkyl mit 1 bis 12 Kohlenstoffatomen, R₂ ein Rest der Formel -CH₂SR₃, R₃ Alkyl mit 6 bis 18 Kohlenstoffatomen, Phenyl oder Benzyl ist, und R₄ Wasserstoff ist.

7. Stabilisatorgemisch nach einem der Ansprüche 1 oder 2, dadurch gekennzeichnet, dass n 0, R₁ ein Rest der Formel -CH₂SR₃, R₃ Alkyl mit 6 bis 18 Kohlenstoffatomen, Phenyl oder Benzyl ist, R₂ Methyl ist und R₄ Wasserstoff ist.

8. Stabilisatorgemisch nach einem der Ansprüche 1 oder 2, dadurch gekennzeichnet, dass (b) ein Gemisch epoxidierter Fettsäureester, insbesondere epoxidiertes Sojabohnenöl oder Leinöl ist.

9. Zusammensetzung enthaltend ein Elastomer oder ein klebrigmachendes Harz oder ein Elastomer und ein klebrigmachendes Harz sowie ein Stabilisatorgemisch nach Anspruch 1.

10. Zusammensetzung nach Anspruch 8 enthaltend als Elastomer lineare oder verzweigte Styrol/Butadien/Styrol- oder Styrol/Isopren/Styrol-Blockcopolymere und als klebrigmachendes Harz Kolophoniumharze oder synthetische Kohlenwasserstoffharze.

11. Verwendung eines Stabilisatorgemischs nach Anspruch 1 zum Stabilisieren von Zusammensetzungen enthaltend ein Elastomer oder ein klebrigmachendes Harz oder ein Elastomer und ein klebrigmachendes Harz.

12. Verfahren zum Stabilisieren von Zusammensetzungen enthaltend ein Elastomer oder ein klebrigmachendes Harz oder ein Elastomer und ein klebrigmachendes Harz durch Verwendung eines Stabilisatorgemisches nach Anspruch 1.

## Claims

1. A stabiliser mixture comprising
(a) a mercaptomethylphenol of the formula 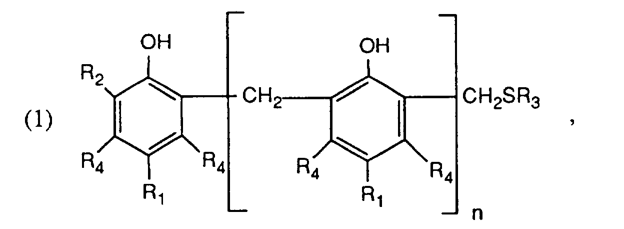 in which n is 0 or 1, R₁ and R₂ independently of one another are alkyl having 1 to 12 carbon atoms or a radical of the formula -CH₂SR₃, in which R₃ is alkyl having 6 to 18 carbon atoms, phenyl or benzyl, and the radicals R₄ independently of one another are hydrogen or methyl, radicals R₄ bonded to the same ring not simultaneously being methyl, and
(b) an epoxidised fatty acid having 3 to 22 carbon atoms or an alkyl ester there of having 1 to 18 carbon atoms,
(a) and (b) being in a weight ratio of 99:1 to 1:10.

2. A stabiliser mixture according to claim 1, wherein (a) and (b) are present in a weight ratio of 10:1 to 1:10.

3. A stabiliser mixture according to either claim 1 or claim 2, wherein n is 0 or 1, R₁ and R₂ independently of one another are alkyl having 1 to 4 carbon atoms or a radical of the formula -CH₂SR₃, R₃ is alkyl having 6 to 12 carbon atoms and the radicals R₄ independently of one another are hydrogen or methyl, radicals R₄ bonded to the same ring not simultaneously being methyl.

4. A stabiliser mixture according to either claim 1 or claim 2, wherein n is 0, R₁ is -CH₂SC₈H₁₇, R₂ is methyl, R₃ is octyl and R₄ are hydrogen.

5. A stabiliser mixture according to either claim 1 or claim 2, wherein n is 0, R₁ is a radical of the formula -CH₂SR₃ in which R₃ is alkyl having 6 to 18 carbon atoms, phenyl or benzyl, R₂ is alkyl having 1 to 12 carbon atoms and R₄ is hydrogen.

6. A stabiliser mixture according to either claim 1 or claim 2, wherein n is 0, R₁ is alkyl having 1 to 12 carbon atoms, R₂ is a radical of the formula -CH₂SR₃, R₃ is alkyl having 6 to 18 carbon atoms, phenyl or benzyl and R₄ is hydrogen.

7. A stabiliser mixture according to either claim 1 or claim 2, wherein n is 0, R₁ is a radical of the formula -CH₂SR₃, R₃ is alkyl having 6 to 18 carbon atoms, phenyl or benzyl, R₂ is methyl and R₄ is hydrogen.

8. A stabiliser mixture according to either claim 1 or claim 2, wherein (b) is a mixture of epoxidised fatty acid esters, in particular epoxidised soyabean oil or linseed oil.

9. A composition comprising an elastomer or a tackifying resin or an elastomer and a tackifying resin as well as a stabiliser mixture according to claim 1.

10. A composition according to claim 8, containing, as elastomer, straight-chain or branched styrene/butadiene/styrene or styrene/isoprene/styrene block copolymers and, as tackifying resin, colophony resins or synthetic hydrocarbon resins.

11. Use of a stabiliser mixture according to claim 1 for stabilising compositions comprising an elastomer or a tackifying resin or an elastomer and a tackifying resin.

12. A process for stabilising compositions comprising an elastomer or a tackifying resin or an elastomer and a tackifying resin by use of a stabiliser mixture according to claim 1.

## Revendications

1. Mélange stabilisant contenant
(a) un mercaptométhylphénol de formule 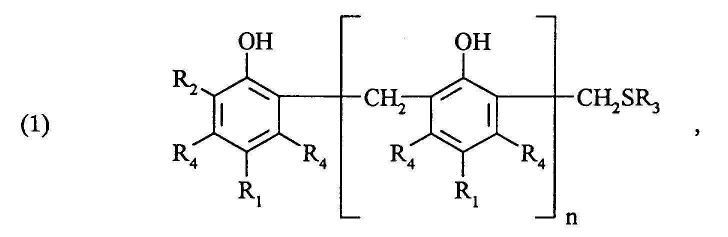 dans laquelle n est 0 ou 1, R₁ et R₂ représentent indépendamment l'un de l'autre un reste alkyle de 1 à 12 atomes de carbone ou un reste de formule -CH₂SR₃, où R₃ est un reste alkyle de 6 à 18 atomes de carbone, phényle ou benzyle, et les restes R₄ représentent indépendamment les uns des autres des atomes d'hydrogène ou des restes méthyle, les restes R₄ liés au même noyau n'étant pas en même temps des restes méthyle, et
(b) un acide gras époxydé de 3 à 22 atomes de carbone ou un de ses esters d'alkyle de 1 à 18 atomes de carbone,
le rapport en masse de (a) et (b) étant de 99:1 à 1:10.

2. Mélange stabilisant selon la revendication 1, caractérisé en ce que le rapport en masse de (a) et (b) est compris entre 10:1 et 1:10.

3. Mélange stabilisant selon l'une des revendications 1 ou 2, caractérisé en ce que n est 0 ou 1, R₁ et R₂ représentent indépendamment l'un de l'autre un reste alkyle de 1 à 4 atomes de carbone ou un reste de formule -CH₂SR₃, R₃ est un reste alkyle de 6 à 12 atomes de carbone, et les restes R₄ sont indépendamment les uns des autres des atomes d'hydrogène ou des restes méthyle, les restes R₄ liés au même noyau n'étant pas en même temps des restes méthyle.

4. Mélange stabilisant selon l'une des revendications 1 ou 2, caractérisé en ce que n est 0, R₁ est -CH₂SC₈H₁₇, R₂ est un reste méthyle, R₃ est un reste octyle et les restes R₄ sont des atomes d'hydrogène.

5. Mélange stabilisant selon l'une des revendications 1 ou 2, caractérisé en ce que n est 0, R₁ est un reste de formule -CH₂SR₃, R₃ représentant un reste alkyle de 6 à 18 atomes de carbone, phényle ou benzyle, R₂ est un reste alkyle de 1 à 12 atomes de carbone et R₄ est un atome d'hydrogène.

6. Mélange stabilisant selon l'une des revendications 1 ou 2, caractérisé en ce que n est 0, R₁ est un reste alkyle de 1 à 12 atomes de carbone, R₂ est un reste de formule -CH₂SR₃, R₃ est un reste alkyle de 6 à 18 atomes de carbone, phényle ou benzyle, et R₄ est un atome d'hydrogène.

7. Mélange stabilisant selon l'une des revendications 1 ou 2, caractérisé en ce que n est 0, R₁ représente un reste de formule -CH₂SR₃, R₃ est un reste alkyle de 6 à 18 atomes de carbone, phényle ou benzyle, R₂ est un reste méthyle et R₄ est un atome d'hydrogène.

8. Mélange stabilisant selon l'une des revendications 1 ou 2, caractérisé en ce que (b) est un mélange d'esters d'acides gras époxydés, en particulier l'huile de soja ou l'huile de lin époxydée.

9. Composition contenant un élastomère ou une résine renforçant l'adhésivité ou un élastomère et une résine renforçant l'adhésivité, ainsi qu'un mélange stabilisant selon la revendication 1.

10. Composition selon la revendication 8, contenant comme élastomère des copolymères à blocs linéaires ou ramifiés styrène/butadiène/styrène ou styrène/isoprène/styrène et comme résine renforçant l'adhésivité des résines colophanes ou des résines hydrocarbonées synthétiques.

11. Utilisation d'un mélange stabilisant selon la revendication 1 pour stabiliser des compositions contenant un élastomère ou une résine renforçant l'adhésivité ou un élastomère et une résine renforçant l'adhésivité.

12. Procédé de stabilisation de compositions contenant un élastomère ou une résine renforçant l'adhésivité ou un élastomère et une résine renforçant l'adhésivité, dans lequel on utilise un mélange stabilisant selon la revendication 1.
